# FASCICULE DE BREVET EUROPEEN

(11) **EP 0 814 005 B1**
(45) Date de publication et mention de la délivrance du brevet: **31.10.2001**
(21) Numéro de dépôt: 97401412.8
(22) Date de dépôt: 19.06.1997
(51) Int. Cl.: B60T 3/00

(54) **Boîte-cale**
Kasten mit Keil
Box with chock

(30) Priorité: 19.06.1996 FR 9607621; 17.06.1997 FR 9707485
(43) Date de publication de la demande: 29.12.1997
(73) Titulaire: Adwest Bowden France S.A., 60730 Cauvigny (FR)
(72) Inventeur: Ruffie, Gilles, 45300 Boynes (FR); Framboisier, David, 45000 Orleans (FR)
(74) Mandataire: Schrimpf, Robert

(56) Documents cités:
- DE-U- 7 210 818
- DE-U- 7 509 378
- US-A- 4 867 278

## Description

L'invention concerne une boîte-cale apte à être posée au sol devant une roue d'un véhicule et appliquée contre une zone du quart inférieur avant de la roue pour maintenir le véhicule afin d'éviter un déplacement intempestif du véhicule, notamment pendant le changement d'une roue,et elle s'applique à tout véhicule comportant un cric et une roue de secours.

De telles boîtes-cales sont décrites dans les publications DE 72 10818 U et DE 75 09378 U.

Ces dispositifs connus présentent l'avantage d'être monoblocs mais rien n'est prévu pour leur fixation dans le véhicule pendant le transport.

On connaît d'autre part une cale apte à être logée dans la jante de la roue de secours du véhicule mais qui est constituée de deux pièces à assembler pour la mise en service de la cale (US 4 867 278).

L'invention vise à fournir une boîte-cale monobloc apte à être logée dans la roue de secours du véhicule.

La boîte-cale de l'invention est constituée d'une boîte de forme générale parallélépipédique munie sur un grand côté d'un appendice extérieur perpendiculaire à ce côté, ladite boîte étant apte à contenir un cric à l'état replié et ledit appendice ayant sa face supérieure incurvée pour pouvoir être appliqué contre une zone du quart inférieur avant d'une roue du véhicule, ladite boîte avec son appendice étant dimensionnés pour pouvoir s'inscrire dans la jante d'une roue de secours du véhicule.

L'invention a donc aussi pour objet l'ensemble constitué par une boîte-cale et le cric logé dans la boîte et l'ensemble constitué par la boîte-cale, le cric et la roue de secours dans laquelle est logée la boîte-cale.

Dans des modes de réalisation avantageux, la boîte-cale présente encore une ou plusieurs des caractéristiques décrites ci-après en référence aux figures du dessin joint relatives à des exemples de réalisation non limitatifs d'un dispositif selon l'invention :
- la figure 1 est une perspective schématique de la boîte-cale, la boîte étant supposée ouverte ;
- la figure 2 est une vue schématique de la boîte-cale en position de transport ;
- la figure 3 est une vue d'une réalisation de la boîte cale et selon l'invention,
- la figure 4 est une perspective schématique de la boîte cale en service,
- la figure 5 est une perspective d'une variante de réalisation de la boîte cale vue de dessous, couvercle ouvert,
- la figure 6 est une vue de dessus de la boîte-cale selon cette variante inscrite dans la jante d'une roue, et
- la figure 7 est une vue latérale de la boîte-cale de la figure 5 posée au sol.

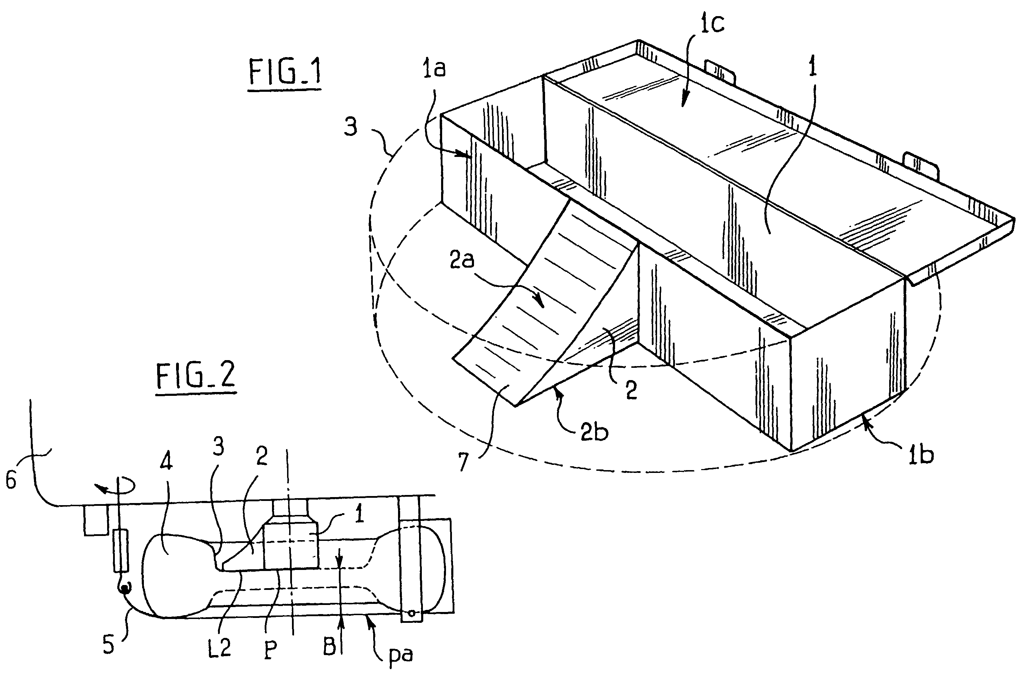

Le dispositif représenté sur les figures 1 à 3 est constitué d'une boîte (1) munie sur un grand côté (1a) d'un appendice extérieur (2) perpendiculaire à ce côté, la forme et les dimensions de la boîte étant conçues pour que la boîte puisse contenir un cric à l'état replié (non représenté sur la figure 1) et pour que la boîte avec son appendice puisse s'inscrire dans la jante (3) d'une roue de secours (4), schématisée par le cylindre en traits pointillés que l'on voit en partie sur la figure 1.

De préférence, la longueur hors-tout de la boîte et/ou de la cale sont choisies pour que la boîte puisse être bloquée dans la jante tout en pouvant en être extraite sans effort excessif, comme on le voit sur les figures.

Un appendice (2), en forme de coin, est fixé solidairement contre un grand côté (1a) de la boîte, perpendiculairement à ce côté. De préférence, cet appendice est venu de moulage avec la boîte. Il présente une face supérieure (2a) incurvée en pente descendante à partir de la boîte ; cette face ainsi que la base (2b) de l'appendice et celle (1b) de la boîte peuvent comporter des moyens tels que par exemple des stries (7) ou des méplats pour augmenter en service leur adhérence par friction à la roue et au sol.

L'appendice a sensiblement même hauteur que la boîte ; sa base (2b) et celle (1b) de la boîte sont coplanaires.

La paroi supérieure (1c) de la boîte constitue un couvercle qui s'ouvre à l'opposé de l'appendice (2).

Si l'on désigne par R le rayon du cercle intérieur (3) de la jante, la longueur (L 2) de l'appendice est sensiblement égale à R- (P1) / 2 où (P1) est la largeur de la boîte, comme on le voit sur la figure 2.

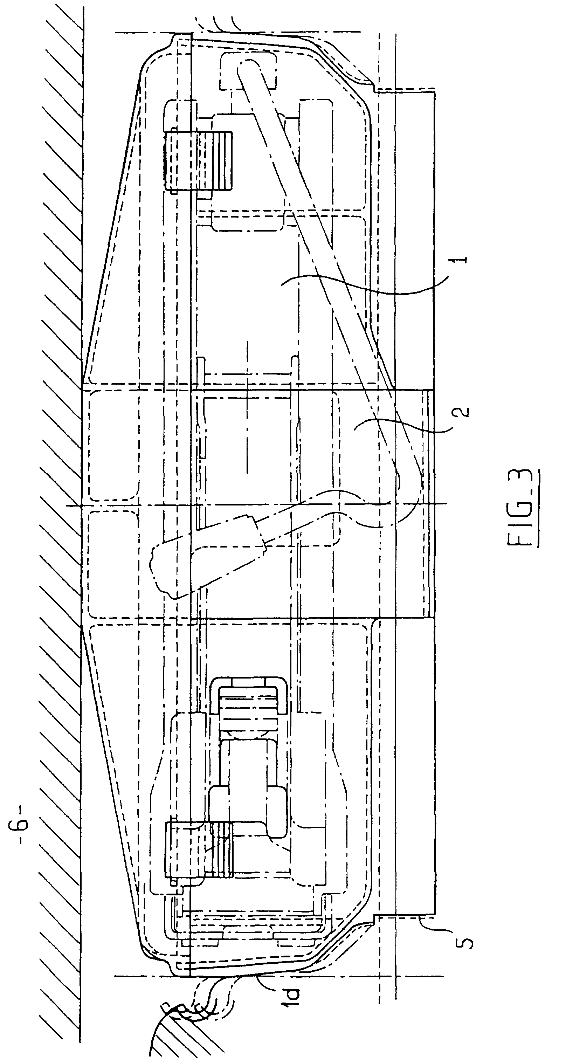

La boîte est conçue pour loger le cric de la voiture, de préférence un cric du type Y, à l'état replié. Sa forme générale parallélépipédique peut être modifiée localement selon la conformation du cric à l'état replié, comme on le voit par exemple sur la figure 3.

De préférence, les petits côtés (1d, 1e) de la boîte ne sont pas plans, comme dans la représentation schématique de la figure 1, mais sont légèrement arrondis pour mieux épouser le profil intérieur de la jante.

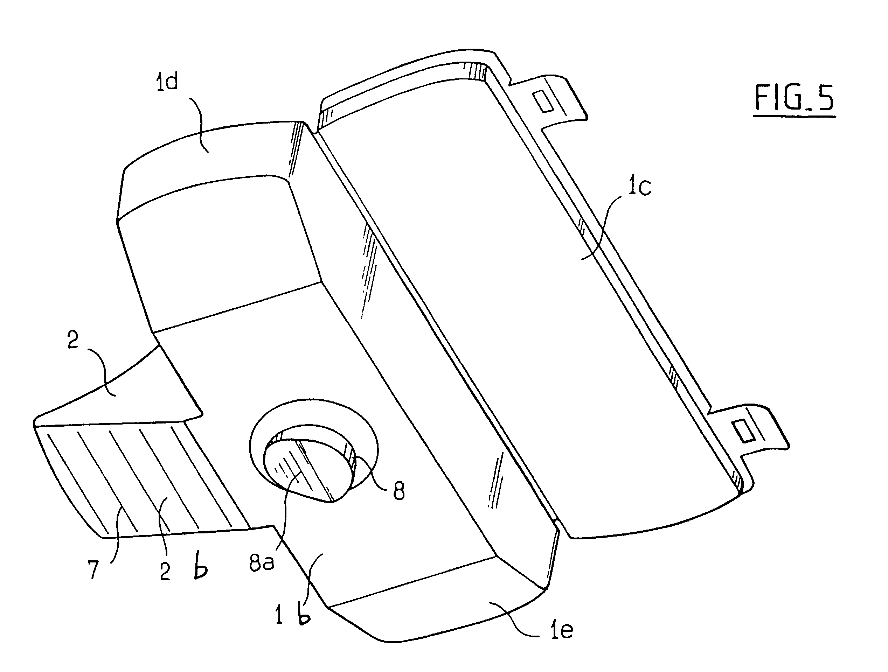

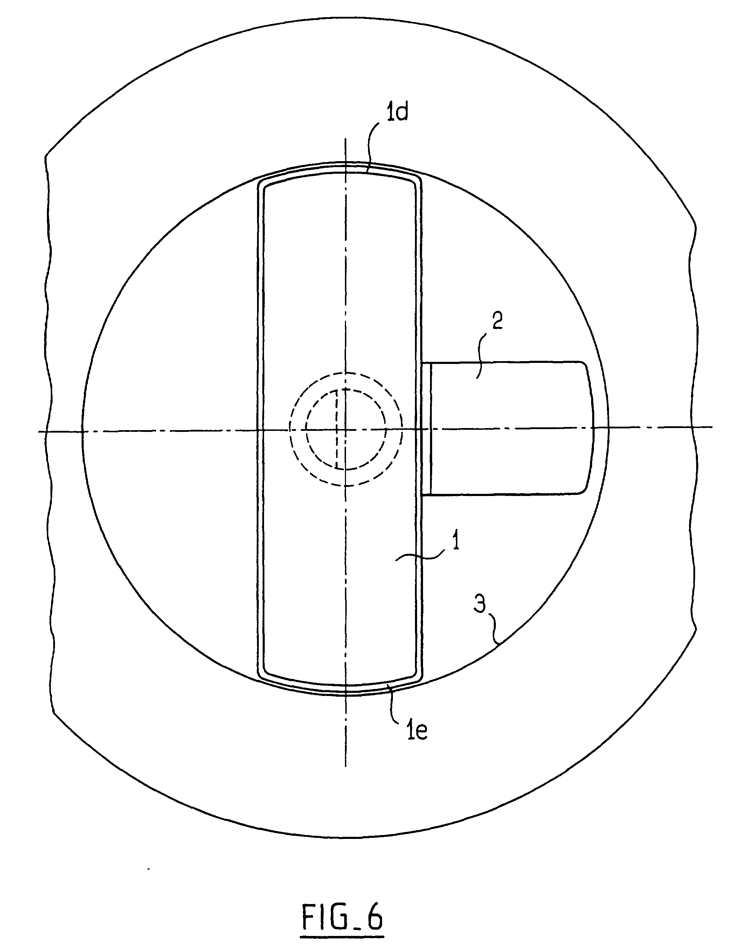

Les figures 5 et 6 montrent une réalisation où cet arrondi est encore plus manifeste.

Dans l'exemple de la figure 2, la boîte avec son appendice sont dimensionnés en hauteur pour pouvoir être bloqués avec la roue de secours dans le panier (5) (ou tout conteneur équivalent) prévu pour loger la roue de secours horizontalement sous le coffre (6) (ou horizontalement ou verticalement dans le coffre), ce qui permet d'éviter des bruits ou des vibrations lorsque le véhicule roule.

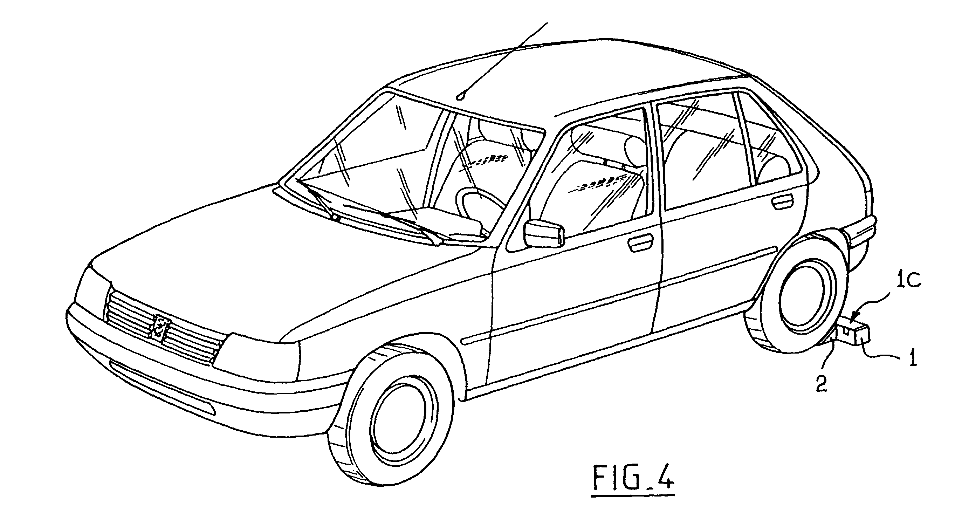

La figure 4 montre la boîte de la figure 3 en service pour caler une roue d'un véhicule, par exemple pendant le changement d'une autre roue. La présence du cric dans la boîte incite l'utilisateur, quand il doit sortir le cric pour changer une roue, à se servir de la boîte pour caler le véhicule pendant ce changement. Lorsque l'opération est terminée, comme il doit ranger le cric dans la boîte, il ne peut oublier cette dernière sur le terrain.

Dans la réalisation des figures 5 à 7, la boîte comporte sous sa paroi de fond (1b), un appendice central (8) destiné à s'inscrire dans le trou de centrage de la roue de secours sur le moyeu lorsque la boîte cale est installée à l'intérieur de la jante. Cet appendice centreur est utile pour le maintien de la boîte cale, notamment lorsque le longueur de la boîte est trop inférieure au diamètre intérieur de la jante pour que la boîte tienne dans la jante par simple encastrement.

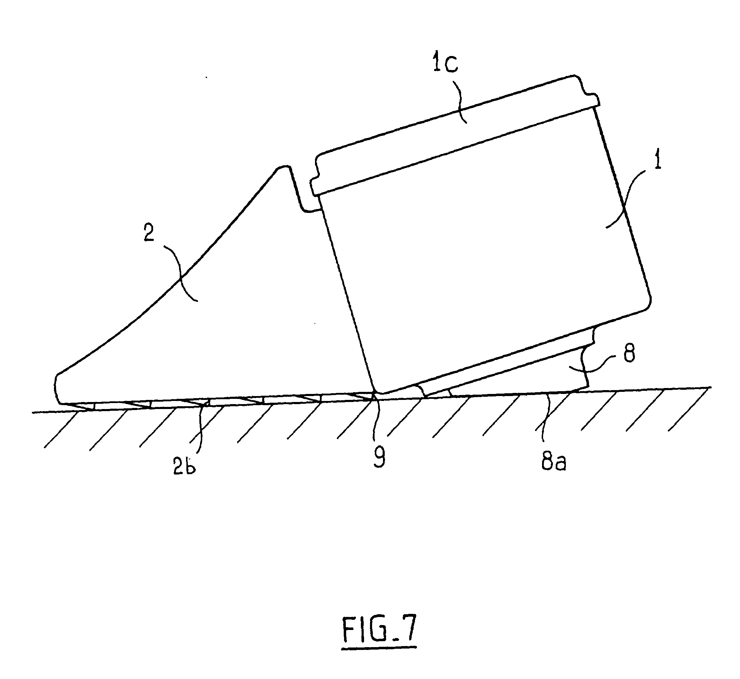

Avantageusement, comme dans le cas représenté (fig. 7), l'appendice centreur (8) présente une surface de base (8a) coplanaire avec la base (2b) de l'appendice cale (2)et oblique par rapport à la paroi de fond de la boîte, en sorte que la boîte cale repose au sol par son appendice cale (2) et son appendice centreur (8), la boîte elle-même étant alors légèrement inclinée dans la direction de l'appendice cale (2) et touchant le sol par son arête inférieure avant (9).

L'invention n'est pas limitée à ces modes de réalisation et il est loisible à l'homme du métier de remplacer les moyens décrits par des moyens équivalents.

## Revendications

1. Boîte-cale apte à être posée au sol devant une roue d'un véhicule et appliquée contre une zone du quart inférieur avant de la roue pour maintenir le véhicule afin d'éviter un déplacement intempestif du véhicule, notamment pendant le changement d'une roue, **caractérisée en ce que** la boîte-cale est constituée d'une boîte (1) de forme générale parallélépipédique munie sur un grand côté d'un appendice extérieur (2) perpendiculaire à ce côté, ladite boîte étant apte à contenir un cric à l'état replié et ledit appendice ayant sa face supérieure (2a) incurvée pour pouvoir être appliqué contre une zone du quart inférieur avant d'une roue du véhicule, ladite boîte avec son appendice étant dimensionnés pour pouvoir s'inscrire dans la jante (3) d'une roue de secours du véhicule.

2. Boîte-cale selon la revendication 1, où la boîte-cale est dimensionnée pour que la boîte puisse être bloquée dans la jante tout en pouvant en être extraite sans effort excessif.

3. Boîte-cale selon l'une des revendications 1 et 2, dont les petits côtés (1d, 1e) de la boîte sont légèrement arrondis pour mieux épouser le profil intérieur de la jante.

4. Boîte-cale selon l'une des revendications précédentes, dont l'appendice a une longueur sensiblement égale à R- (P1) / 2 où R est le rayon de la jante et (P1) est la largeur de la boîte.

5. Boîte-cale selon l'une des revendications précédentes, où l'appendice a sensiblement même hauteur que la boîte.

6. Boîte-cale selon l'une des revendications précédentes, où la base de la boîte et celle de l'appendice sont coplanaires.

7. Boîte-cale selon l'une des revendications 1 à 4, où la boîte comporte sous sa paroi de fond (1b), un appendice central (8) destiné à s'inscrire dans le trou de centrage de la roue de secours sur le moyeu lorsque la boîte cale est installée à l'intérieur de la jante.

8. Boîte-cale selon la revendication 7, où l'appendice centreur (8) présente une surface de base (8a) coplanaire avec la base (2b) de l'appendice cale (2)et oblique par rapport à la paroi de fond de la boîte, en sorte que la boîte cale repose au sol par son appendice cale (2) et son appendice centreur (8), la boîte elle-même étant alors légèrement inclinée dans la direction de l'appendice cale (2) et touchant le sol par son arête inférieure avant (9).

9. Boîte-cale selon l'une des revendications précédentes, où la paroi supérieure (1c) de la boîte constitue un couvercle qui s'ouvre à l'opposé de l'appendice.

10. Boîte-cale selon l'une des revendication précédentes, où la boîte avec son appendice sont dimensionnés en hauteur pour pouvoir être bloqués avec la roue de secours dans un réceptacle (5) destiné à contenir la roue de secours.

11. Ensemble constitué d'une boîte-cale selon l'une des revendications 1 à 10 et d'un cric logé dans ladite boîte-cale.

12. Ensemble constitué d'un ensemble selon la revendication 11 et d' une roue de secours dans laquelle est logé l'ensemble selon la revendication 11.

## Patentansprüche

1. Kasten mit Keil, der dazu eingerichtet ist, vor einem Rad eines Fahrzeugs auf den Boden gelegt und gegen einen Bereich des unteren Viertels vor dem Rad angelegt zu werden, um das Fahrzeug zu halten, damit eine unangebrachte Bewegung des Fahrzeugs, besonders während eines Radwechsels, verhindert wird, **dadurch gekennzeichnet, daß** der Kasten mit Keil von einem Kasten (1) mit insgesamt quaderförmiger Gestalt gebildet ist, der an seiner einen großen Seite mit einem äußeren Anhang (2) senkrecht zu dieser Seite ausgestattet ist, wobei der genannte Kasten dazu eingerichtet ist, einen Wagenheber im zusammengeklappten Zustand aufzunehmen, und der genannte Anhang mit seiner oberen Fläche (2a) einwärts gekrümmt ist, um gegen einen Bereich des unteren Viertels vor einem Rad eines Fahrzeugs angelegt werden zu können, und wobei der genannte Kasten mit seinem Anhang so bemessen ist, daß er der Felge (3) eines Reserverades des Fahrzeugs einbeschrieben werden kann.

2. Kasten mit Keil nach Anspruch 1, wobei der Kasten mit Keil so bemessen ist, daß der Kasten in der Felge blockiert werden kann, während er gleichzeitig aus ihr ohne übermäßige Anstrengung herausgezogen werden kann.

3. Kasten mit Keil nach einem der Ansprüche 1 und 2, wobei die kleinen Seiten (1d, 1e) des Kastens leicht abgerundet sind, um sich besser an das Innenprofil der Felge anzuschmiegen.

4. Kasten mit Keil nach einem der vorhergehenden Ansprüche, wobei der Anhang eine Länge hat, die im wesentlichen gleich R - (P1) / 2 gleich ist, wobei R der Radius der Felge und (P1) die Breite des Kastens ist.

5. Kasten mit Keil nach einem der vorhergehenden Ansprüche, wobei der Anhang im wesentlichen dieselbe Höhe wie der Kasten hat.

6. Kasten mit Keil nach einem der vorhergehenden Ansprüche, wobei die Grundfläche des Kastens und die des Anhangs koplanar sind.

7. Kasten mit Keil nach einem der Ansprüche 1 bis 4, wobei der Kasten unter seiner Bodenwand (1b) einen mittigen Anhang (8) aufweist, der dazu bestimmt ist, sich in die Zentrierbohrung des Reserverades auf der Nabe einzufügen, wenn der Kasten mit Anhang im Inneren der Felge eingesetzt ist.

8. Kasten mit Keil nach Anspruch 7, wobei der zentrierende Anhang eine Basisfläche (8a) aufweist, die koplanar mit der Grundfläche (2b) des Keilanhangs (2) ist und in Bezug auf die Bodenwand des Kastens schräg, und zwar derart, daß der Kasten mit Keil mit seinem Keilanhang (2) und seinem zentrierenden Anhang (8) auf dem Boden ruht, während der Kasten seinerseits dann leicht in Richtung des Keilanhangs (2) geneigt ist und den Boden mit seiner unteren Vorderkante (9) berührt.

9. Kasten mit Keil nach einem der vorhergehenden Ansprüche, wobei die obere Wand (1c) des Kastens einen Deckel bildet, der sich dem Anhang entgegegengerichtet öffnet.

10. Kasten mit Keil nach einem der vorhergehenden Ansprüche, wobei der Kasten mit seinem Anhang in der Höhe derart bemessen sind, daß sie zusammen mit dem Reserverrad in einem Behälter (5) blockiert werden, der zur Aufnahme des Reserverades bestimmt ist.

11. Baugruppe, die aus einem Kasten mit Keil nach einem der Ansprüche 1 bis 10 und einem Wagenheber gebildet ist, der im genannten Kasten mit Keil aufgenommen ist.

12. Baugruppe, die aus einer Baugruppe nach Anspruch 11 und einem Reserverad gebildet ist, in dem die Baugruppe nach Anspruch 11 aufgenommen ist.

## Claims

1. A box with a chock suitable for placing on the ground in front of a vehicle wheel and pressed against a front bottom quarter zone of the wheel to hold the vehicle in order to prevent untimely movement of the vehicle, in particular when changing a wheel, **characterized in that** the box with a chock is constituted by a box (1) of generally rectangular shape provided on a long side with an external appendix (2) perpendicular to said side, said box being suitable for containing a jack in the folded state and said appendix having its top face (2a) curved so as to be suitable for being pressed against a front bottom quarter zone of a vehicle wheel, said box with its appendix being of dimensions suitable for being capable of being received inside the rim (3) of a spare wheel for the vehicle.

2. A box with a chock according to claim 1, in which the box with a chock is dimensioned so that the box can be held securely in the rim while still being capable of being extracted therefrom without excessive force.

3. A box with a chock according to claim 1 or claim 2, in which the short sides (1d, 1e) of the box are slightly rounded so as to fit more closely to the inside profile of the rim.

4. A box with a chock according to any preceding claim, in which the length of the appendix is substantially equal to R - (P1)/2 where R is the radius of the rim and (P1) is the width of the box.

5. A box with a chock according to any preceding claim, in which the appendix is of substantially the same height as the box.

6. A box with a chock according to any preceding claim, in which the bottom of the box and the bottom of the appendix are coplanar.

7. A box with a chock according to any one of claims 1 to 4, in which the box includes a central appendix (8) beneath its bottom wall (1b) for use, when the box with a chock is installed inside the rim, for fitting in the hole for centering the spare wheel on the hub.

8. A box with a chock according to claim 7, in which the centering appendix (8) has a base surface (8a) coplanar with the base (2b) of the chock appendix (2) and sloping relative to the bottom wall of the box, so that the box with a chock rests on the ground via its chock appendix (2) and its centering appendix (8), with the box itself then sloping slightly towards the chock appendix (2) and touching the ground via its front bottom edge (9).

9. A box with a chock according to any preceding claim, in which the top wall (1c) of the box constitutes a lid which opens away from the appendix.

10. A box with a chock according to any preceding claim, in which the height dimension of the box with its appendix is suitable for being secured together with the spare wheel in a receptacle (5) for containing the spare wheel.

11. An assembly comprising a box with a chock according to any one of claims 1 to 10, and a jack received in said box with a chock.

12. An assembly constituted by an assembly according to claim 11 and a spare wheel in which the assembly of claim 11 is housed.
